(19) Europäisches Patentamt
European Patent Office
Office européen des brevets

(11) **EP 2 055 548 B1**

(12) **EUROPEAN PATENT SPECIFICATION**

(45) Date of publication and mention
of the grant of the patent:
**12.03.2014 Bulletin 2014/11**

(21) Application number: **07792879.4**

(22) Date of filing: **22.08.2007**

(51) Int Cl.:
*B60W 10/06* (2006.01)   *B60K 6/46* (2007.10)
*B60L 11/08* (2006.01)   *B60L 11/12* (2006.01)
*B60W 10/08* (2006.01)   *B60W 10/26* (2006.01)
*B60W 20/00* (2006.01)   *B61C 3/02* (2006.01)
*B61C 5/00* (2006.01)   *B61C 7/04* (2006.01)
*B60L 11/18* (2006.01)

(86) International application number:
**PCT/JP2007/066290**

(87) International publication number:
**WO 2008/023736 (28.02.2008 Gazette 2008/09)**

(54) **DRIVER OF ROLLING STOCK**

ANTRIEB FÜR EIN SCHIENENFAHRZEUG

Entraînement d'un véhicule ferroviaire

(84) Designated Contracting States:
**FR GB**

(30) Priority: **24.08.2006 JP 2006227585**

(43) Date of publication of application:
**06.05.2009 Bulletin 2009/19**

(73) Proprietors:
• **Hitachi, Ltd.**
**Chiyoda-ku**
**Tokyo 100-8280 (JP)**
• **East Japan Railway Company**
**Tokyo 151-8578 (JP)**

(72) Inventors:
• **SHIMADA, Motomi**
**Hitachinaka-shi, Ibaraki 312-8506 (JP)**
• **TOYOTA, Eiichi**
**Hitachinaka-shi, Ibaraki 312-8506 (JP)**
• **KANEKO, Takashi**
**Hitachinaka-shi, Ibaraki 312-8506 (JP)**

• **MIYAUCHI, Tsutomu**
**Hitachi-shi, Ibaraki 319-1292 (JP)**
• **NOMOTO, Hiroshi**
**Tokyo 151-8578 (JP)**
• **SHIMAMUNE, Ryohei**
**Tokyo 151-8578 (JP)**
• **FURUTA, Ryosuke**
**Tokyo 151-8578 (JP)**
• **OMURA, Tetsuro**
**Tokyo 151-8578 (JP)**

(74) Representative: **Paget, Hugh Charles Edward et al**
**Mewburn Ellis LLP**
**33 Gutter Lane**
**London**
**EC2V 8AS (GB)**

(56) References cited:
JP-A- 2000 115 907   JP-A- 2004 282 859
JP-A- 2005 061 278   JP-A- 2005 229 745
JP-A- 2006 101 571   US-A1- 2005 262 827
US-B1- 6 687 582

**Description**

TECHNICAL FIELD

The present invention relates to a driver of a rolling stock, and specifically, relates to an art of driving a rolling stock having a power generation means and a power storage means using the power generated via the two means.

BACKGROUND ART

Rolling stocks have smaller running resistance compared to automobiles since they travel via iron wheels rolling on rail surfaces. Especially, recent electric rolling stocks perform regenerative brake control in which the main electric motor is used as generator during braking to obtain braking force, and simultaneously, the electric energy generated in the main electric motor during braking is returned to overhead wires to be reused as power running energy of other rolling stocks. The electric rolling stocks having such regenerative braking are capable of travelling with approximately half the energy consumption of electric rolling stocks without regenerative braking, and therefore, they realize an energy saving method utilizing the characteristics of rolling stocks having small running resistance.

On the other hand, diesel cars that do not require infrastructures such as overhead wires and substations are used in regional routes and the like having small transport density, in order to realize meticulous passenger services at low costs. However, since diesel cars do not have any means such as overhead wires for handing over energy to other cars, reuse of regenerative energy performed for example in electric rolling stocks have not been performed. Therefore, it was considered that the only way to realize energy saving in diesel cars is to depend on the development of low-fuel consumption engines.

One method for promoting energy-saving in diesel cars is a hybrid diesel car having combined an engine and a power storage unit. Hybrid diesel cars are equipped with a power storage unit, so that the regenerative energy generated during braking can be absorbed temporarily in the power storage unit, and by reusing the absorbed regenerative energy as part of the energy required during power running, energy saving is realized.

Hybrid diesel cars are described, for example, in the driver of rolling stock disclosed in patent document 1. FIG. 9 is a configuration diagram of the hybrid diesel car system disclosed in patent document 1. The system comprises a converter unit 3 for converting the AC power generated by a generator 2 driven via an engine 1 to DC power, an inverter unit 4 for converting the DC power to AC power, a power storage unit 8 having a function to charge and discharge the DC power, and an electric motor 5 for driving the rolling stock, wherein upon supplying the DC power generated by the converter unit 3 and the DC power generated by the power storage unit 8 to the inverter unit 4, the storage energy stored in the power storage unit 8 is set in a control unit 39 as a power storage management reference pattern with respect to vehicle speed, and the DC power generated by the converter unit is controlled according to the difference between the power storage quantity based on the pattern and the actual power storage quantity of the power storage unit 8.
Patent Document 1: Japanese Patent Application Laid-Open Publication No. 2004-282859

JP 2005061278 suggests a controller capable of improving the operabi of a hybrid vehicle. US-A-2004/0030470 suggests an apparatus and method for controlling the idle speed of a powertrain. US-A-2005/0262827 suggests an electronic engine control device, a vehicle equipped with an electronic engine control device, and an electronic engine control method.

SUMMARY OF THE INVENTION

PROBLEM TO BE SOLVED BY THE PRESENT INVENTION

A hybrid diesel car is a system capable of realizing energy-saving effects by recovering the regenerative energy during braking via the power storage unit, and reusing the same. Especially in a "series hybrid system" in which the rotation axis of the engine is mechanically separated from the rotation of the wheels, the system characterizes in that the rotational speed of the engine can be determined regardless of vehicle speed. According to the configuration of this series hybrid system, when power generation by the engine is not required, it is possible to perform idle stop in which the engine is stopped. By performing this idle stop, the hybrid diesel car can further enhance the merit of reducing fuel consumption. Further, according to prior art diesel cars, a dedicated motor is used to provide starting torque to the engine in order to start the engine. Therefore, in order to prevent rapid stopping/starting of the engine, it was normal to continue idle operation of the engine even when the diesel car is stopped at a station, which caused noise within the station yard.

As for the hybrid diesel car of the above-described series hybrid system, the engine can be completely stopped via idle stop function when the diesel car stops, so the engine noise within the station yard can be reduced.

According to the driver of rolling stock of patent document 1 illustrated in FIG. 9, it is disclosed in the preferred embodiment of the invention that the operation of engine/converter is "stopped" according to travel conditions. However, it is not clarified which of the engine/converter the operation is stopped. Further, there is no description on the actual method for performing stop control.

As for the hybrid diesel car of the series hybrid system, the engine can be stopped when engine power generation is not required. However, when considering the operation of actual rolling stocks, there are cases where the starting of power generation of the engine is delayed, such as when performing power running from an engine stop state. During the period where the generation power of the engine cannot be obtained, all the accelerating power must be borne by the power storage unit, so that the load on the power storage unit becomes high, possibly causing failure of the power storage unit due to excessive discharge power.

In other words, in order to perform idle stop control in hybrid diesel cars, it is important to solve the following technical problems so as to realize idle stop control for the first time.

(1) Appropriately determining a state in which idle stop is possible based on the operation state and travel state of the vehicle.
(2) Studying the power running performance considering the response from the engine start command to when generation power is actually obtained.

The object of the present invention is to provide an environment-friendly driver of rolling stock of a series hybrid system in which a power storage means is combined with and a power generating unit driven by the engine, and the DC power supplied via the above combination is converted to AC power via an inverter to drive the motor, realizing an idle stop control system capable of appropriately determining the condition in which engine stop and capable of ensuring stable power running performance considering the response of engine generation, capable of reducing the fuel consumption quantity and reducing the engine noise.

MEANS FOR SOLVING THE PROBLEM

The driver of rolling stock according to the present invention is disclosed by claim 1.

EFFECT OF THE PRESENT INVENTION

According to the present invention, an environment-friendly driver of rolling stock of a series hybrid system is provided in which a power storage means is combined with a power generating unit driven by the engine, and the DC power supplied via the above combination is converted to AC power via an inverter unit to drive a motor, realizing an idle stop control system capable of appropriately determining the condition in which engine stop is possible and capable of ensuring stable power running performance considering the response of engine generation, thereby enabling to reduce the fuel consumption quantity and engine noise.

BRIEF DESCRIPTION OF THE DRAWINGS

FIG. 1 is a view illustrating a basic configuration of a control unit of an electric rolling stock according to embodiment 1 of the present invention;
FIG. 2 is a view showing the configuration for realizing an idle stop control according to embodiment 2 of the present invention;
FIG. 3 is a frame format showing one example of the control condition of idle stop control according to embodiment 3 of the present invention;
FIG. 4 is a control block diagram for realizing accelerating power control according to embodiment 4 of the present invention;
FIG. 5 is a frame format showing one example of operation of accelerating power control according to embodiment 5 of the present invention;
FIG. 6 is a control block diagram realizing the engine start-and-stop control according to embodiment 6 of the present invention;
FIG. 7 is a frame format showing one example of a control system of engine start-and-stop control according to embodiment 7 of the present invention;
FIG. 8 is a frame format showing one example of operation of engine start-and-stop control according to embodiment 8 of the present invention; and

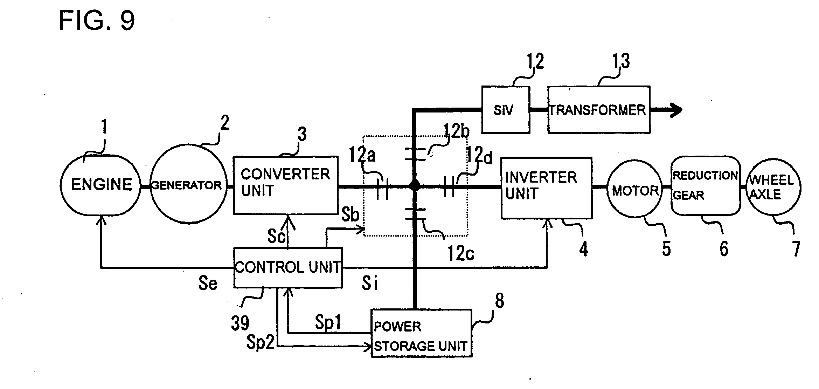

FIG. 9 is a view showing the configuration of a control unit of a prior art hybrid diesel car.

DESCRIPTION OF REFERENCE NUMBER

**[0016]**

| | |
|---|---|
| 1 | engine |
| 2 | induction generator |
| 3 | converter unit |
| 4 | inverter unit |
| 5 | electric motor |
| 6 | reduction gear |
| 7 | wheel set |
| 8 | power storage unit |
| 9 | system general control section |
| 10 | inverter for service power supply |
| 11 | transformer |
| 12 | breaker |
| 13 | speed sensor |
| 14 | speed detector |
| 15 | filter condenser |
| 16 | current sensor |
| 17 | resistor |
| 18 | voltage sensor |
| 19 | engine control unit |
| 20 | PWM controller (vector control computing unit) |
| 21 | constant power controller (current command generator) |
| 22 | current detector |
| 23 | energy management and control section |
| 24 | engine power generation output control section |
| 25 | excitation current command generation section |
| 26 | torque current command generation section |
| 27 | torque current limit value generation section |
| 28 | low-order selector |
| 29 | selector |
| 30 | rate-of-change limiter |
| 31 | engine output characteristic |
| 32 | engine output characteristic selection section |
| 33 | engine output control section |
| 34 | generator output characteristic |
| 35 | generator output characteristic selection section |
| 36 | selector |
| 37 | rate-of-change limiter |
| 38 | generator torque control selection section |
| 39 | control unit |

BEST MODE FOR CARRYING OUT THE INVENTION

Now, the preferred embodiments for carrying out the present invention will be described with reference to the drawings.

EMBODIMENT 1

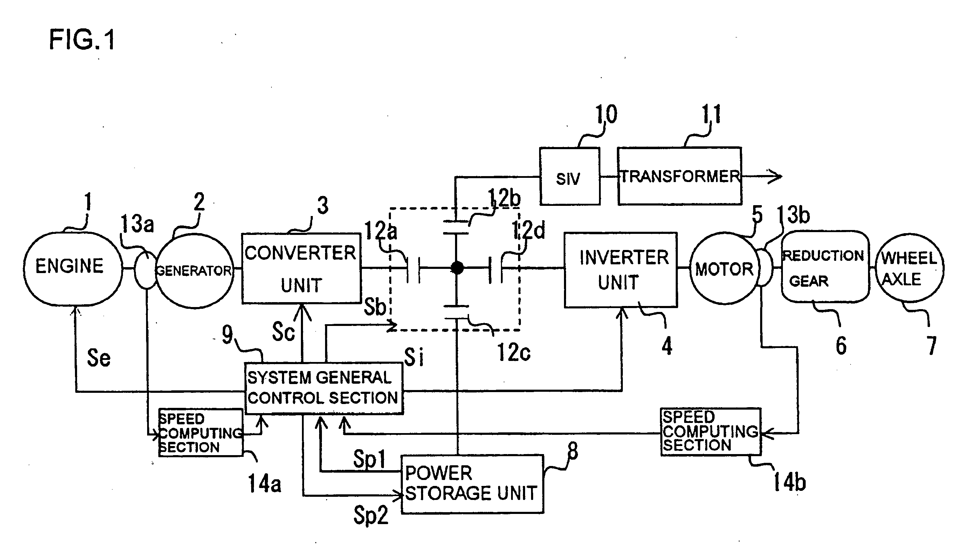

FIG. 1 is a view illustrating the basic configuration of a control unit of an electric rolling stock according to embodiment 1 of the present invention.

Engine 1 outputs axial torque according to command Se from a system general control section 9. A generator 2 receives input of the entered axial torque of engine 1, converts the same into three-phase AC power, and outputs the same. A converter unit 3 receives input of the entered three-phase AC power output from the generator 2, converts the same into DC power, and outputs the same. Here, the converter unit 3 performs voltage control so that the DC voltage corresponds to the command Sc from the system general control section 9.

An inverter unit 4 receives input of the entered DC power output from the converter unit 3, converts the same into a three-phase AC power, and outputs the same. An electric motor 5 receives input of the entered three-phase AC power output from the inverter unit 4, converts the same into axial torque, and outputs the same. Here, the inverter unit 4 refers to a rotational speed signal Fr_inv described later so that the output torque of the electric motor 5 corresponds to the output torque in the command Si from the system general control section 9, and performs variable control of the output voltage and the AC frequency of the inverter unit 4.

A reduction gear 6 amplifies the axial torque output of the electric motor 5 by reducing the rotational speed and outputs the same, so as to drive the wheel set to accelerate and decelerate the electric rolling stock.

The system general control section 9 receives input of internal state signal Sp1 of the power storage unit 8, and outputs an operation command Se to the engine 1, an operation command Sc to the converter unit 3, an operation command Si to the inverter unit 4, an operation command Sb to breakers 12a, 12b, 12c and 12d, and an operation command Sp2 to a charge-discharge control unit disposed in the power storage unit 8, thereby controlling the overall operation status of these devices so that the storage quantity of the secondary battery falls within a given range. Further, it enables to control either independently or comprehensively the engine 1, the converter unit 3, the inverter unit 4, the power storage unit 8 and the breaker 12 based on the speed information obtained via the speed sensors 13a, 13b and the speed computing units 14a, 14b and based on the internal state signals obtained via the power storage unit 8.

An inverter unit 10 for service power supply converts the entered DC power between the converter unit 3 and the inverter unit 4 into three-phase AC power, and outputs the same. Further, the power is controlled via a service power transformer 11 as service power voltage supplied for example to the lighting and the air conditioner of the electric rolling stock, and supplied to various service devices.

The breaker 12a is arranged in a DC power section between the converter unit 3 and the inverter unit 4, and positioned closest to an input terminal of the converter unit 3. When the engine 1 and the converter unit 3 are not operated due to malfunction or the like, the breaker 12a is opened based on the operation command Sb from the system general control section 9, by which the power supply to the converter unit 3 is stopped to ensure the safety of the device. Similarly, when the voltage of the DC power section between the converter unit 3 and the inverter unit 4 becomes excessive, the breaker 12a is opened based on the operation command Sb from the system general control section 9, by which the power supply to the converter unit 3 is stopped to prevent failure of the converter unit 3.

The breaker 12b is arranged between the DC power section provided between converter unit 3 and inverter unit 4 and the service power supply inverter unit 10. When the voltage of the DC power section exceeds the allowable input voltage of the service power supply inverter unit 10, the breaker 12b is opened based on the operation command Sb from the system general control section 9, by which the power supply from the converter unit 3 and the inverter unit 4 to the service power supply inverter unit 10 is stopped to prevent failure of the service power supply inverter unit 10.

The breaker 12c is arranged between the DC power section provided between converter unit 3 and inverter unit 4 and the input output terminal of the power storage unit 8. When the allowable power storage quantity of the power storage unit 8 overflows, or when the input output current with the DC power section exceeds the allowable input output current value of the power storage unit 8, the breaker 12c is opened based on the operation command Sb from the system general control section 9, by which the power supplied from the DC power section between converter unit 3 and inverter unit 4 to the power storage unit 8 is stopped to prevent failure of the power storage unit 8.

The breaker 12d is arranged in a DC power section between the converter unit 3 and the inverter unit 4, and positioned closest to an input terminal of the inverter unit 4. When the inverter unit 4 is not operated due to malfunction or the like, the breaker 12d is opened based on the operation command Sb from the system general control section 9, by which the power supply to the inverter unit 4 is stopped to prevent malfunction. Similarly, when the supplied power from the converter unit 3 and the power storage unit 8 to the inverter unit 4 becomes excessive, the breaker 12d is opened based on the operation command Sb from the system general control section 9, by which the power supply to the inverter unit 4 is stopped to prevent failure.

A speed sensor 13a detects the rotational speed of the generator 2, which is converted via a speed computing unit 14a to rotational speed signal Fr_cnv.

A speed sensor 13b detects the rotational speed of the electric motor 5, which is converted via a speed computing unit 14b to rotational speed signal Fr_inv.

The above-described arrangement enables to realize the following operations.

The generator 2 is driven by the axial output of the engine 1, and the three-phase AC power generated by the generator 2 is converted via the converter unit 3 into DC power. The DC power is converted via the inverter unit 4 into three-phase AC power to drive the electric motor 5. The axial output of the electric motor 5 is reduced via the reduction gear 6 to rotate the wheel set 7, so as to obtain driving force of the rolling stock. Further, the power storage unit 8 is connected to the DC power section between converter unit 3 and inverter unit 4, by which the overs and shorts of DC power are charged to and discharged from the power storage unit 8. That is, the driving unit of the rolling stock according to the present invention realizes the configuration of a series hybrid system.

Since the present system includes a system general control section 9, the engine 1, the converter unit 3, the inverter unit 4, the power storage unit 8 and the breaker 12 can be controlled either independently or integrally based on the speed information obtained via the speed sensors 13a, 13b and the speed computing unit 14a, 14b and the internal state signal obtained via the power storage unit 8.

According to the present configuration, the system general control section 9 determines whether generation power of the engine 1 is required or not based on the rotational speed Fr_cnv of the generator 2 obtained via the speed sensor 13a and the speed computing unit 14a, the rotational speed Fr_inv of the electric motor 5 obtained via the speed sensor 13b and the speed computing unit 14b, and the internal state signal Sp1 obtained via the power storage unit 9, controls the power generation status based on the operation command Se to the engine 1 and the operation command Sc to the converter unit 3, and if generation power of the engine 1 is not necessary, determines whether the stopping of the engine is possible or not, and provides a command to stop the engine via the operation command Se to the engine 1. In other words, the present configuration enable to realize idle stop control, by which the fuel consumption quantity can be reduced and the engine operation nose can be cut down.

When generation power via the engine 1 cannot be obtained due to idle stop control, the system general control section 9 outputs an operation command Si to the inverter unit 4 based on the rotational speed Fr_inv of the electric motor 5 obtained via the speed sensor 13b and the speed computing unit 14b and the internal state signal Sp1 obtained via the power storage unit 8, and performs control so as to restrict the output of the electric motor 5 driven by the inverter unit 4 corresponding to the maximum output bound of the power storage unit 8. In other words, when the generation power of the engine 1 cannot be obtained due to idle stop control, stable acceleration can be realized only through the discharge power of the power storage unit 8.

Furthermore, the system general control section 9 determines whether it is necessary to start or stop the engine 1 based on the rotational speed Fr_cnv of the generator 2 obtained via the speed sensor 13a and the speed computing unit 14a, the rotational speed Fr_inv of the electric motor 5 obtained via the speed sensor 13b and the speed computing unit 14b, and the internal state signal Sp1 obtained via the power storage unit 9, outputs an operation command Sc to the converter unit 3, and controls the starting and stopping of the engine 1 via the torque of the generator 2. In other words, by promptly controlling the starting and stopping of the engine 1 via the torque of the generator 2, it becomes possible to shorten the engine power generation start time during idle stop control, reduce the time of acceleration using only the discharge power of the power storage unit 8, and minimize the deterioration of acceleration performance of the rolling stock.

EMBODIMENT 2

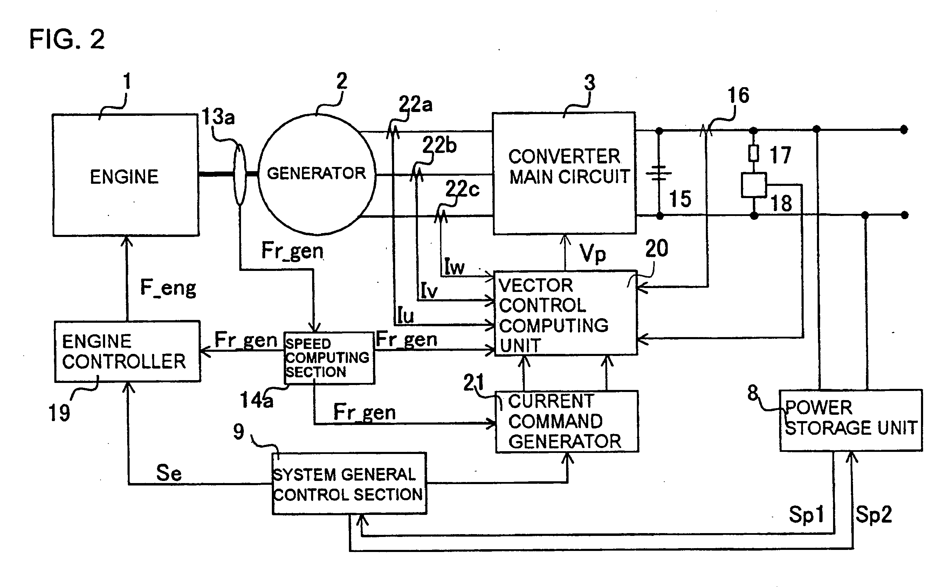

FIG. 2 is a view showing the configuration for realizing idle stop control according to embodiment 2 of the present invention.

An engine 1 outputs axial torque based on a fuel injection quantity command F_eng of an engine control section 19. A generator 2 receives input of the entered axial torque of the engine 1, converts the same into three-phase AC power, and outputs the same. A converter unit 3 receives input of the entered three-phase AC power output from the generator 2, converts the same into DC power, and outputs the same. Here, the converter unit 3 performs voltage control via a gate signal Vp output from a PWM controller (vector control computing unit) 20 so that the DC voltage corresponds to the command Sc from a system general control section 9.

The system general control section 9 receives input of internal state signal Sp1 of a power storage unit 8, and outputs an operation command Se to an engine control unit 19, an operation command Sc to a constant power controller (current command generator) 21, an operation command Si to an inverter unit 4 not shown, an operation command Sb to breakers 12a, 12b, 12c and 12d not shown, and an operation command Sp2 to a charge-discharge control unit disposed in the power storage unit 8, thereby controlling the overall operation status of these devices so that the storage quantity of the power storage unit 8 falls within a certain range.

The speed sensor 13a detects the rotational speed of the generator 2, and converts the same into a generator rotor frequency Fr_cnv at a speed computing unit 14a.

A filter condenser 15 smoothes the voltage component that fluctuates especially at high frequencies of the DC power converted via the converter unit 3, so as to stabilize the voltage of the DC section. A current sensor 16 detects the current flowing into the DC section or the current flowing out of the DC section via the filter condenser 15 from the converter unit 3.

A resistor 17 shunts the current flowing into the DC section or flowing out of the DC section, and a voltage sensor 18 detects the potential difference of the DC section using the principle that the voltage at both ends of the resistor 17 is proportional to the current flowing in the resistor 17.

The engine control unit 19 receives input of the operation command Se from the system general control section 9 and the rotational speed signal Fr_gen from the speed computing unit 14b, and outputs a fuel injection quantity command F_eng for controlling the output of the engine 1.

A constant power controller 21 receives input of the operation command Sc from the system general control section 9, the rotational speed signal F_cnv from the speed computing unit 14a, the DC section current detection value Icnv from the current sensor 16 and a DC section voltage detection value Vcnv from the voltage sensor 18, and outputs a voltage command Vc_cnv for determining the voltage control quantity of the PWM controller 20 mentioned later.

The PWM controller 20 receives input of the voltage command Vc_cnv from a constant voltage controller 21 and Fr_cnv from a speed computing unit 14b, and outputs a switching element gate signal Vp for driving the PWM control via the on and off of a switching element not shown constituting the converter unit 3.

The present configuration realizes the following operation.

The driver of a rolling stock according to embodiment 2 of the present invention comprises a system general control section 9, and is capable of controlling the engine 1 and the converter unit 3 independently or integrally based on the speed information obtained via the speed sensor 13a and the speed computing unit 14a, the speed information obtained via the speed sensor 13b and the speed computing unit 14b not shown, and the internal state signal obtained via the power storage unit 8.

According to the present configuration, the system general control section 9 determines whether the generation power of the engine 1 is required or not based on the rotational speed Fr_cnv of the generator 2 obtained via the speed sensor 13a and the speed computing unit 14a, the rotational speed Fr_inv of the electric motor 5 obtained via the speed sensor 13b and the speed computing unit 14b not shown, and the internal state signal Sp1 obtained via the power storage unit 8, controls the power generation state via the operation command Se to the engine 1 and the operation command Sc to the converter unit 3, and if generation power of the engine 1 is unnecessary, determines whether the engine can be stopped or not, and provides a command to stop the engine via the operation command Se to the engine 1. In other words, the present embodiment can realize an idle stop control, thereby reducing the fuel consumption quantity and the engine operation noise.

EMBODIMENT 3

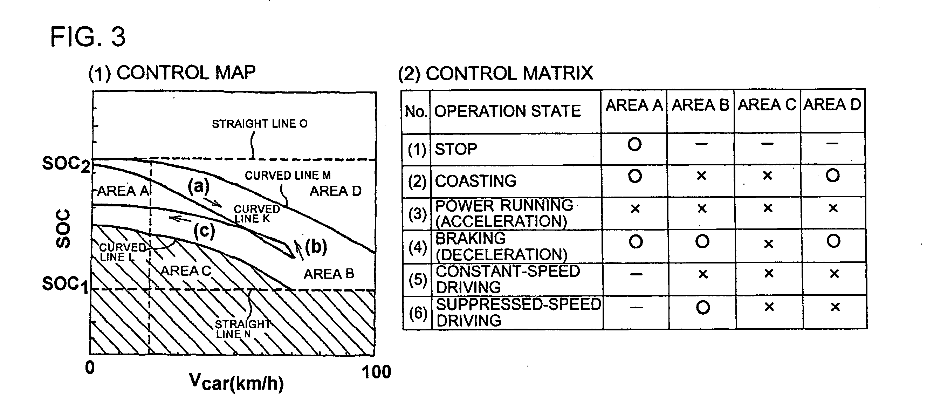

FIG. 3 is a frame format illustrating one example of conditions of idle stop control according to embodiment 3 of the present invention.

Here, we will describe a method for determining idle stop control conditions based on a " (1) control map" and a " (2) control matrix" as an example of idle stop control conditions.

The "(1) control map" is a plane showing the velocity of the rolling stock on the horizontal axis (X axis) and the storage quantity of the power storage unit 8 mentioned earlier on the vertical axis (Y axis). The state of power storage of the power storage unit 8 is determined by the relationship between the above parameters. Here, the trajectory K in the drawing shows a general relationship between the vehicle velocity Vcar and the power storage quantity SOC according to a case where the rolling stock accelerates from a stopped state to a speed of 70 km/h (power running), coasts and then decelerates until the rolling stock stops (breaking). The trajectory K illustrates the following states.

(a) During acceleration: The stored energy of the power storage unit 8 is converted into kinetic energy of the rolling stock, therefore, as the speed of the rolling stockVcar increases, the storage quantity SOC of the power storage unit 8 gradually decreases.
(b) During coasting: The speed of the rolling stock Vcar gradually reduces by running resistance, but the power storage quantity SOC gradually increases by the generation power of the engine.
(c) During deceleration: Since the kinetic energy of the rolling stock is converted into power storage energy of the power storage unit 8, the power storage quantity SOC of the power storage unit 8 gradually increase as the speed of the rolling stock Vcar decreases (regenerative braking).

The storage energy of the power storage unit 8 converted into kinetic energy during power running is normally not equal to the storage energy of the power storage unit 8 converted from kinetic energy during braking. This is because during travelling of the rolling stock, energy loss always exists due to grade resistance, curve resistance and vehicle resistance such as mechanical resistance and air resistance, or due to operation of devices. According to the driver of rolling stock according to embodiment 3 of the present invention, the rolling stock can travel continuously by compensating for the energy loss by the generation power of the engine. The principle of this operation will be described hereafter.

The curved line L positioned on the lower side of trajectory K shows the state in which the storage energy of the power storage unit 8 is converted into kinetic energy during acceleration of the rolling stock when the aforementioned loss does not exist or is very small. Similarly, the curved line M positioned on the upper side of trajectory K shows the state in which the kinetic energy of the rolling stock is converted into storage energy of the power storage unit 8 during deceleration of the rolling stock when the aforementioned loss does not exist or is very small. Further, straight line N shows the discharge limitation (SOC_min) of the power storage unit 8, and straight line O shows the charge limitation (SOC_max) of the power storage unit 8.

Area A, area B, area C and area D separated by curved line L, curved line M, straight line N and straight line O are provided. Here, area A and area B are areas surrounded by curved line L and curved line M, which shows the ideal range of power storage quantity. According to the driver of rolling stock in embodiment 3 of the present invention, by determining the area in which the relationship between the speed Vcar at that time and the power storage quantity SOC of the power storage unit 8 falls, and simultaneously reflecting the operation state of the rolling stock to switch the operation state of the engine, the power storage quantity SOC of the power storage unit 8 is controlled to fall within the ideal power storage state of areas A and B regardless of the level of energy loss.

When the power storage quantity SOC of the power storage unit 8 is controlled as above, there always exists a state where power generation via the engine is not necessary. This is a state where the power storage quantity is mainly relatively transiting at a high value, which corresponds to area D in the control map (1). However, even if the power storage quantity SOC is within area D, power generation assistance via the engine is required when the operation state is set to power running. Further, during deceleration (braking), the power generation via the engine is stopped from the viewpoint of saving energy so as to charge the regenerative energy to a maximum level. When the power storage quantity SOC is relatively high during stop (area A), power generation using the engine is not necessary since power is supplied to auxiliary machinery (service machinery) of the rolling stock using only the storage energy of the power storage unit 8.

As described, if power generation via the engine is not necessary, it is common to set the engine to idle operation. However, since the driver of rolling stock according to the present invention is a series hybrid system in which the engine and the driving system (wheels) is not mechanically connected, so that even when the rolling stock is running, the operation of the engine can be stopped (idle stop) when the power generation via the engine is not necessary.

The "(2) control matrix" illustrates an example of control conditions showing the state where idle stop is possible in the following operation commands NTC of the rolling stock ((1) stop, (2) coasting, (3) power running (acceleration), (4) braking (deceleration), (5) constant-speed driving, (6) suppressed-speed driving) with respect to areas (areas A, B, C and D) of the control map (1). In the present control matrix, the state where idle stop is possible is shown by a circle, the state where idle stop is not possible is shown by a cross, and the state where such setup does not exist (such combination of operation status of the rolling stock and control map (1) does not exist) is shown by a horizontal line.

In area D where the power storage quantity of the power storage unit 8 has the most margin, idle stop is performed during (2) coasting and (4) braking. During (3) power running (acceleration) and (5) constant-speed driving having an acceleration mode, idle stop is not possible since power generating operation of the engine is required. Further, during (6) suppressed-speed driving, the engine performs load operation (engine brake).

Furthermore, in area A which is a low speed driving state including a stopped state, idle stop is performed during (1) stop, (2) coasting and (4) braking (deceleration). During (3) power running (acceleration), idle stop is not possible since power generating operation of the engine is required.

On the other hand, in area B where a constant quantity of power storage quantity SOC of the power storage unit 8 is secured, idle stop is possible during (4) braking and (6) suppressed-speed driving.

Idle stop is performed for stopping the engine in the above conditions when generating operation by the engine is not required.

According to this control system, the system general control section 9 refers to the (1) control map and the (2) control matrix based on the rotational speed Fr_cnv of the generator 2, the operation command NTC from the driver's cab and the storage quantity SOC of the power storage unit 8 in order to determine whether generation power of the engine 1 is required or not, and if the generation power of the engine 1 is not necessary, determines whether it is possible to stop the engine, and provides a command to stop the engine 1. In other words, the present system can perform idle stop control, thereby reducing the fuel consumption quantity and reducing the engine operation noise.

EMBODIMENT 4

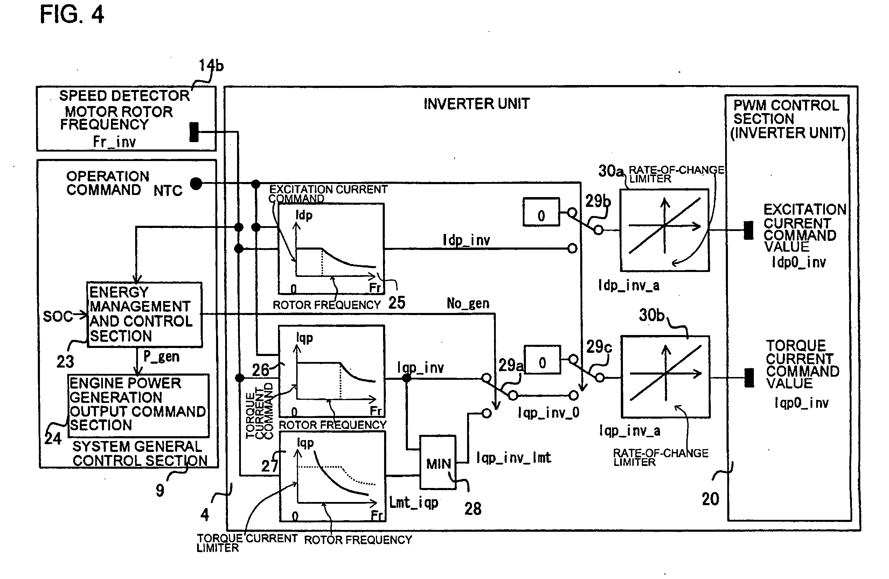

FIG. 4 is a control block diagram for realizing accelerating power control according to embodiment 4 of the present invention.

The system general control section 9 is composed of an energy management and control section 23 and an engine generation output control section 24.

The energy management and control section 23 determines whether engine power generation at that time is required or not based on an electric motor rotor frequency Fr_inv computed via the speed detector 14b, a power storage quantity SOC computed via the power storage unit 8 not shown and an operation command from a driver's cab not shown, and outputs an engine generation interruption signal No_gen.

Further, the energy management and control section 23 computes a generation power P_gen required at that time based on the electric motor rotor frequency Fr_inv computed via the speed detector 14b and the power storage quantity SOC computed via the power storage unit 8 not shown, and enters the same to an engine power generation output command section 24, but the detailed description thereof is omitted since the signal is not used in the accelerating power control illustrated in the present drawing.

Here, the accelerating power control is a function realized in the inverter unit 4, and the function is realized via an excitation current command generating section 25, a torque current command generating section 26, a torque current limit value generating section 27, a low-order selector 28, a selector 29 and a rate-of-change limiter 30.

The excitation current command generating section 25 receives input of the electric motor rotor frequency Fr_inv computed via the speed detector 14b and the operation command NTC from a driver's cab not shown, and refers to an excitation current command characteristic curve with respect to the electric motor rotor frequency Fr_inv to output an excitation current command Idp_inv.

The torque current command generating section 26 receives input of the electric motor rotor frequency Fr_inv computed by the speed detector 14b and the operation command NTC from a driver's cab not shown, and refers to a torque current command characteristic curve with respect to the electric motor rotor frequency Fr_inv to output a torque current command Iqp_inv.

Here, the excitation current command generation section 25 and the torque current command generation section 26 are functions that are generally provided in an inverter unit performing drive control via vector control, and the output torque of the electric motor being driven via the inverter unit is track-controlled so as to be proportional to the torque current command Iqp_inv output by the torque current command generation section 26. Further, in the drawing illustrating the excitation current command generation section 25 and the torque current command generation section 26, one type of characteristic curve corresponding to the rotor frequency Fr is illustrated as a representation of the respective variety of sections. It is assumed that a plurality of characteristic curves with respect to the rotor frequency Fr are provided for the excitation current command generation section 25 and the torque current command generation section 26, and the selection thereof is performed via the operation command NTC.

The torque current limit value generation section 27 receives input of the electric motor rotor frequency Fr_inv computed by the speed detector 14b, and refers to the torque current limit value characteristic curve corresponding to the electric motor rotor frequency Fr_inv to output the torque current limit value Lmt_iqp.

Now, the torque current limit value characteristic curve in the torque current limit value generation section 27 is determined according to a maximum output performance P_btr [W] of the power storage unit 8 not shown. One example of a method for computing the torque current limit value Lmt_iqp when the electric motor 5 not shown is a three phase induction motor is described in the following.

The torque current limit value Lmt_iqp [A] is expressed by the following expression, using an equipment loss $\zeta$_inv of the inverter unit 4 not shown, an equipment loss $\zeta$_mtr of the motor 5 not shown, a pole pair number **Pole**, an excitation inductance L, an equipment efficiency $\zeta$_gear of a reduction gear 6 not shown, and a motor rotor frequency Fr_inv [Hz] computed by the speed detector 14b.

[Expression 1]

$$Lmt\_iqp = \frac{P\_btr \times \zeta\_inv \times \zeta\_mtr \times \zeta\_gear}{Idp\_inv \times Pole \times 3 \times L \times \pi} \bullet \frac{1}{Fr\_mtr}$$

The low-order selector 28 selects the smaller value of the torque current command Iqp_inv output from the torque current command generation section 26 and the torque current limit value Lmt_iqp output from the torque current limit value generation section 27, and outputs a limited torque current command Iqp_inv_lmt.

The selector 29a receives input of the torque current command Iqp_inv output from the torque current command generation unit 26, the limited torque current command Iqp_inv_lmt output from the low-order selector 28 and an engine power generation interruption signal No_gen output from the energy management and control section 23, wherein when the engine power generation interruption signal No_gen denotes "0 (low)", it selects the torque current command Iqp_inv, and when the engine power generation interruption signal No_gen denotes "1 (high)", it selects the limited torque current command Iqp_inv_lmt, and outputs a torque current command Iqp_inv_0 as a result.

The selector 29b receives input of the excitation current command Idp_inv output from the excitation current command generation unit 25 and the operation command NTC, wherein when the operation command NTC is other than "power running", it selects zero output, and when the operation command NTC is "power running", it selects an excitation current command Idp_inv, and outputs an excitation current command Idp_inv_a as a result.

The selector 29c receives input of the torque current command Iqp_inv_0 output from the selector 29a and the operation command NTC, wherein when the operation command NTC is other than "power running", it selects zero output, and when the operation command NTC is "power running", it selects a torque current command Iqp_inv_0, and outputs a torque current command Iqp_inv_a as a result.

The rate-of-change limiter 30a receives input of the excitation current command Idp_inv_a output from the selector 29b, limits the rate of change per unit time of the excitation current command Idp_inv_a, and outputs a final excitation current command Idp0_inv to be input to the PWM control section 20.

The rate-of-change limiter 30b receives input of the torque current command Iqp_inv_a output from the selector 29c, limits the rate of change per unit time of the torque current command Iqp_inv_a and outputs a final torque current command Iqp0_inv to be input to the PWM control section 20.

The present arrangement realizes the following operation. The embodiment includes a system general control section 9, and it is capable of controlling the inverter unit 4 based on the speed information obtained via the speed sensor 13b and the speed computing section 14b and the internal state signal obtained via the power storage unit 8.

According to the present arrangement, during the time where no generation power by the engine 1 is obtained via idle stop control, the system generation control section 9 outputs a torque current command Iqp0_inv to the inverter unit 4 based on the rotational speed Fr_inv of the motor 5 obtained via the speed sensor 13b and the speed computing section 14b and based on the power storage quantity SOC obtained via the power storage unit 8, and enables control to limit the output of the motor 5 driven by the inverter unit 4 according to the maximum output bound of the power storage unit 9. In other words, during the time when generation power of the engine 1 cannot be obtained due to idle stop control, stable acceleration is realized only by the discharge power of the power storage unit 8.

EMBODIMENT 5

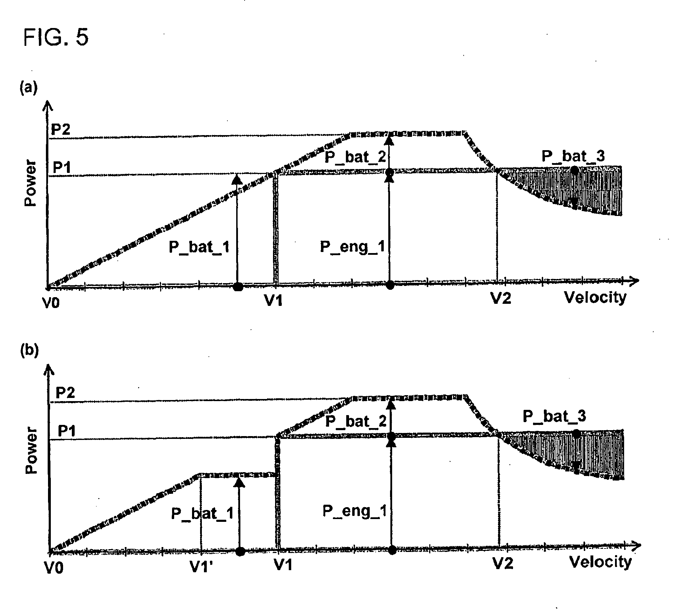

FIG. 5 is a frame format illustrating one example of the operation of accelerating power control according to embodiment 5 of the present invention.

In FIG. 5, (a) is a view showing in frame format the ratio of accelerating power borne by the engine 1 and the power storage unit 8 with respect to vehicle velocity when it is not necessary to limit accelerating power during idle stop. On the other hand, (b) is a view showing in frame format the ratio of accelerating power borne by the engine 1 and the power storage unit 8 with respect to vehicle velocity when the accelerating power is restricted during idle stop. The horizontal axis (X axis) represents vehicle velocity V, and the vertical axis (Y axis) represents accelerating power borne by the engine 1 or the power storage unit 8.

In FIG. 5(a), velocity V0 to velocity V1 is an idle stop state in which no power generation by the engine 1 is performed. At this time, all the accelerating power is borne by the discharge power P_bat_1 of the power storage unit 8. When the vehicle velocity reaches V1, power generation by the engine 1 is started, and temporarily, all the accelerating power is borne by the generation power P_eng_1 of the engine 1. At this time, at velocity V1, since the discharge power P_bat_1 of the power storage unit 8 and the generation power P_eng_1 of the engine 1 are equal, the required accelerating power is borne only by the power storage unit 8 in the velocity range up to velocity V1. From vehicle velocity V1 to V2, the generation power P_eng_1 by the engine 1 is supplemented by the discharge power P_bat_2 of the power storage unit 8 to obtain the necessary accelerating power. In the velocity range higher than velocity V2, the generation power P_eng_1 by the engine 1 is excessive with respect to the necessary accelerating power, so the difference is stored in the power storage unit 8 as charging power P_bat_3.

As described, (a) illustrates a case where the necessary accelerating power required in the velocity range from velocity V0 to velocity V1 in the idle stop state is borne only by the power storage unit 8. On the other hand, (b) illustrates a state where power running is performed in the state where the output performance of the power storage unit 8 cannot be obtained sufficiently. Possible cases where the output performance of the power storage unit 8 cannot be obtained sufficiently includes a case where the output performance itself of the power storage unit 8 is small, a case where the charge-discharge performance is deteriorated since the thermal insulation of the power storage unit 8 is not sufficient in cold regions, and a case where the discharge performance is deteriorated since there is little power storage quantity.

In FIG. 5(b), velocity V0 to velocity V1 is an idle stop state in which no power generation by the engine 1 is performed. At this time, all the accelerating power is borne by the discharge power P_bat_1 of the power storage unit 8 from velocity V0 to velocity V1'. However, since the discharge power P_bat_1 of the power storage units at velocity V0 is the maximum limit of the discharge performance of the power storage unit 8, it is not possible to perform a greater discharge than P_bat_1. Therefore, accelerating power is limited to P_bat_1 fromvelocity V1' to velocity V1, and it is not possible to bear all the necessary accelerating power. At this time, if the power storage unit 8 attempts to discharge greater power than P_bat_1, the maximum limit of the discharge performance of the power storage unit 8 is exceeded and the output voltage of the power storage unit 8 is reduced. When the output voltage of the power storage unit 8 is reduced significantly, the power running of the vehicle cannot be continued since a protection function to prohibit discharge in order to protect the power storage unit 8 is generally provided. In the present invention, stable power running operation can be continued by suppressing the accelerating power of the inverter unit 4 to be smaller than the maximum limit of discharge power of the power storage unit 8 so as not to exceed the maximum limit of discharge performance of the power storage unit 8 in the state where power generation by the engine 1 is not performed.

Thereafter, at the point of time when the vehicle velocity reaches V1, power generation by the engine 1 is started, and temporarily, all the accelerating power is borne by the generation power P_eng_1 of the engine 1. After starting power generation by engine 1, the necessary accelerating power can be obtained by the generation power P_emg_1 of the engine and the discharge power P_bat_2 of the power storage unit 8, so it is not necessary to suppress the accelerating power of the inverter unit 4 to be smaller than the maximum limit of discharge power of the power storage unit 8. From vehicle velocity V1 to V2, the generation power P_eng_1 by the engine 1 is supplemented by the discharge power P_bat_2 of the power storage unit 8 to obtain the necessary accelerating power. In the velocity range higher than velocity V2, the generation power P_eng_1 by the engine 1 is excessive with respect to the necessary accelerating power, so the difference is stored in the power storage unit 8 as charging power P_bat_3.

According to the above control method, during the time where generation power via the engine 1 cannot be obtained due to idle stop control, it is possible to control the output of the motor 5 driven by the inverter unit 4 to be limited corresponding to the maximum output bound of the power storage unit 9. In other words, during the time where generation power of the engine 1 cannot be obtained due to idle stop, stable acceleration can be realized only via the discharge power of the power storage unit 8.

EMBODIMENT 6

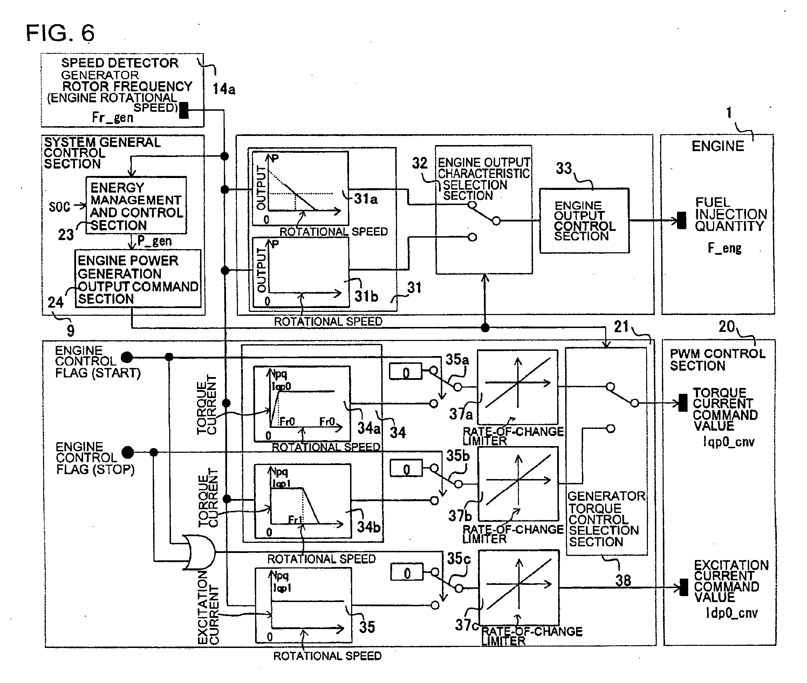

FIG. 6 is a control block diagram for realizing engine start-and-stop control according to embodiment 6 of the present invention.

The system general control section 9 is composed of an energy management and control section 23 and an engine power generation control section 24.

The energy management and control section 23 computes the necessary generation power P_gen at that time based on the information of the generator rotor frequency Fr_cnv computed via the speed detector 14a and the information on the power storage quantity SOC computed via the power storage unit 8 not shown.

The engine power generation output command section 24 selects a notch step corresponding to the engine notch set in advance with respect to the generation power computed via the energy management and control section 23.

The engine control unit 19 is composed of an engine output characteristic pattern generator 31, an engine output characteristic selection section 32, and an engine output control section 33.

The engine output characteristic pattern generator 31 receives input of the generator rotor frequency (engine rotational speed) Fr_cnv, and outputs a corresponding output value.

A plurality of engine output characteristic pattern generators 31 are prepared in advance corresponding to the necessary number of output patterns. In the present example describing a driver of a rolling stock according to embodiment 6 of the present invention, for sake of simplifying the description related to engine start-and-stop control, only two patterns are selectively illustrated, an engine output characteristic pattern 31a for realizing idle operation of the engine, and an engine output characteristic pattern 31b in which the engine is at stopped state.

The engine output characteristic pattern 31a is an engine output pattern for realizing idle operation, wherein according to the engine output characteristics, a target point in which the engine output balances with the mechanical resistance of the engine in idling rotational speed is set, and when the rotational speed of the engine becomes greater than the target rotational speed, the engine output decreases, and when the rotational speed of the engine becomes smaller than the target rotational speed, the engine output increases.

The engine output characteristic pattern 31b is an engine output pattern for bringing the engine to stopped state, wherein the engine output is set to zero regardless of the rotational speed of the engine. When this engine characteristic pattern is selected, the fuel injection quantity F_eng which is the output of the engine output control section described later is set to zero.

The engine output characteristic selection section 32 selects engine output command patterns 31a and 31b according to the engine output characteristic 31 in response to the engine generation command Se output by the engine power generation output command section 24. In the example, only two engine output patterns 31a and 31b of the engine output characteristics are selectively illustrated as one preferred embodiment of the driver of rolling stock according to the present invention with the aim to simplify the description especially related to engine start-and-stop control, and it is not intended to restrict the number of engine output patterns.

The above arrangement enables to realize the following operation.

The embodiment comprises a system general control section 9, wherein the engine 1 and the converter unit 3 can be controlled either independently or integrally based on the speed information obtained via the speed sensor 13a and the speed computing section 14a and the internal state signal obtained via the power storage unit 8.

According to the above arrangement, the system general control section 9 determines whether starting or stopping of the engine is required or not based on the rotational speed Fr_cnv of the generator 2 obtained via the speed sensor 13a and the speed computing section 14a and the power storage quantity SOC obtained via the power storage unit 9, outputs a torque current command value Iqp0_cnv to the converter unit 3, and controls the starting and stopping of the engine via the torque of the generator 2. In other words, by promptly controlling the starting and stopping of the engine 1 via the torque of the generator 2, the engine generation start time during idle stop control can be shortened, the time required for performing acceleration using only the discharge power of the power storage unit 8 can be shortened, and the deterioration of acceleration performance of the rolling stock can be minimized.

EMBODIMENT 7

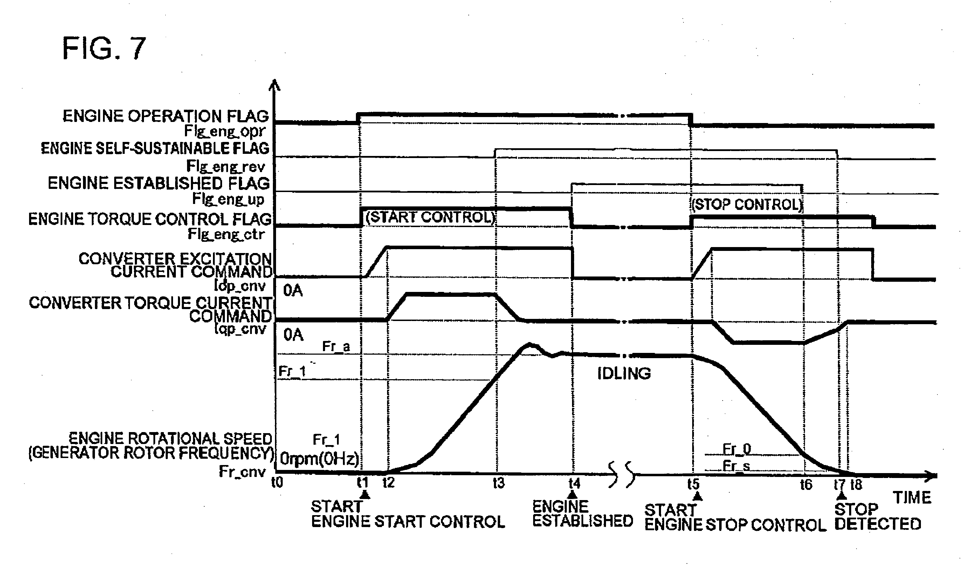

FIG. 7 is a frame format illustrating one example of the control method of the engine start-and-stop control according to embodiment 7 of the present invention.

FIG. 7 is a time chart showing the relationship between the behavior of the various control signals and the engine rotational speed according to the engine start-and-stop control.

An engine operation flag Flg_eng_opr is an engine operation command signal supplied from the system general control section 9 to the engine control unit 19, and when the signal is "1 (High)", the engine 1 is operated at least via idle operation.

An engine self-sustainable flag Flg_eng_rev is a signal for showing that the engine 1 has reached a rotational speed zone capable of being controlled via the engine control unit 19, which is set to "1 (High)" when the rotational speed of the engine 1 is equal to or greater than a given value.

An engine established flagFlg_eng_up is a signal for showing that the idle operation of the engine 1 has been established, which is set to "1 (High)" when it is determined that the rotational speed of the engine 1 has maintained idle speed for a given period of time.

An engine control flag Flg_eng_ctr is a command signal for operating the engine start control and engine stop control. In FIG. 7, it is distinguished that when the Flg_eng_ctr is at high order, it represents start control, and when it is at low order, it represents stop control.

A converter excitation current command Idp_cnv shows the behavior of the excitation current command value of the converter for performing drive control of the engine 1.

A converter torque current command Iqp_cnv shows the behavior of the torque current command value of the converter for performing drive control of the engine 1.

An engine rotational speed (generator rotor frequency) Fr_cnv shows the behavior of the rotational speed of the engine 1 when the engine 1 is subjected to engine start control and stop control.

The operation of the engine start control and engine stop control will be described hereafter with time.

(Engine start control)

At time t0, the engine 1 is at stopped state, and all the command signals are set to zero.

At time t1, the engine operation flag Flg_eng_opr is set to "1 (High)". Simultaneously, the engine control flag Flg_eng_ctr is set to "1 (High) [higher order]" and the engine start control is started. At first, the converter excitation current command Idp_cnv is launched, and the drive torque control of the engine 1 is prepared.

At time t2, the converter torque current command Iqp_cnv is launched. Thereby, the rotational speed of the engine 1 is accelerated.

At time t3, the engine rotational speed Fr_cnv reaches speed Fr_1. When the rotational speed of the engine 1 is Fr_1 or greater, the engine can be controlled via the engine control unit 19, so the engine self-sustainable flag Flg_eng_rev is set to "1 (High) ". Further, the converter torque current command Iqp_cnv performs control to gradually reduce the rotational speed of Fr_1 or greater, so that the rotational speed Fr_cnv is converted to idle rotational speed Fr_a.

At time t4, after confirming that the rotational speed of the engine 1 maintained an idle rotational speed Fr_a for a given period of time, the engine established flag Flg_eng_up is set to "1 (High)", and simultaneously, the engine control flag is returned to "0 (Low)". Thereby, the converter excitation current command Idp_cnv is launched to zero, and the engine start control is completed.

(Engine stop control)

At time t5, the engine operation flag Flg_eng_oper is set to "0 (Low)". Simultaneously, the engine control flag Flg_eng_ctr is set to "1 (High) [low order]", and the engine stop control is started. First, the converter excitation current command Idp_cnv is launched, and the drive torque control of the engine 1 is prepared.

At time t6, the converter torque current command Iqp_cnv is launched. At this time, since the rotation of the engine 1 is decelerated, the converter torque current command Iqp_cnv is set to generate braking torque. In FIG. 7, the converter torque current command Iqp_cnv is set to positive value during start control, wherein the value is set to negative value during stop control to decelerate the rotational speed of the engine 1.

At time t7, the engine rotational speed Fr_cnv reaches speed Fr_0. At this time, the engine established flag Flg_eng_up is set to "0 (low)". Further, the converter torque current command Iqp_cnv is gradually reduced from speed Fr_0 or smaller, in order to prepare the engine 1 to be at a stopped state at speed zero.

At time t8, the engine rotational speed Fr_cnv reaches speed Fr_s. At this time, the engine self-sustainable flag Flg_eng_rev is set to "0 (Low) ". Speed Fr_s is the minimum value of the engine rotational speed Fr_cnv that can be distinguished by the speed computing section 14a, and torque control of the generator 5 cannot be performed at a speed smaller than this speed. Therefore, the converter torque current command Iqp_cnv is cut off at a point of time where the engine rotational speed Fr_cnv reaches speed Fr_s.

Further, when the converter torque current command Iqp_cnv is cut off at time t8, the engine rotational speed Fr_cnv is not completely stopped, even though the speed is extremely close to zero. In other words, the present control assumes that the final stopping of the engine is performed by the rotational resist of the engine. This is aimed at preventing the engine stop control frombeing continued until the rotation axis of the engine 1 is rotated in the reverse direction.

According to this arrangement, the system general control section 9 determines whether it is necessary to start or stop the engine based on the rotational speed Fr_cnv of the generator 2 obtained via the speed sensor 13a and the speed computing section 14a and the power storage quantity SOC obtained via the power storage unit 8, outputs a torque current command Iqp_cnv to the converter unit 3, and controls the starting and stopping of the engine via the torque of the generator 2. In other words, by promptly controlling the starting and stopping of the engine 1 via the torque of the generator 2, it becomes possible to shorten the start time of engine power generation during idle stop control, to shorten the time to perform acceleration using only the discharge power of the power storage unit 8, and to minimize the deterioration of acceleration performance of the rolling stock.

EMBODIMENT 8

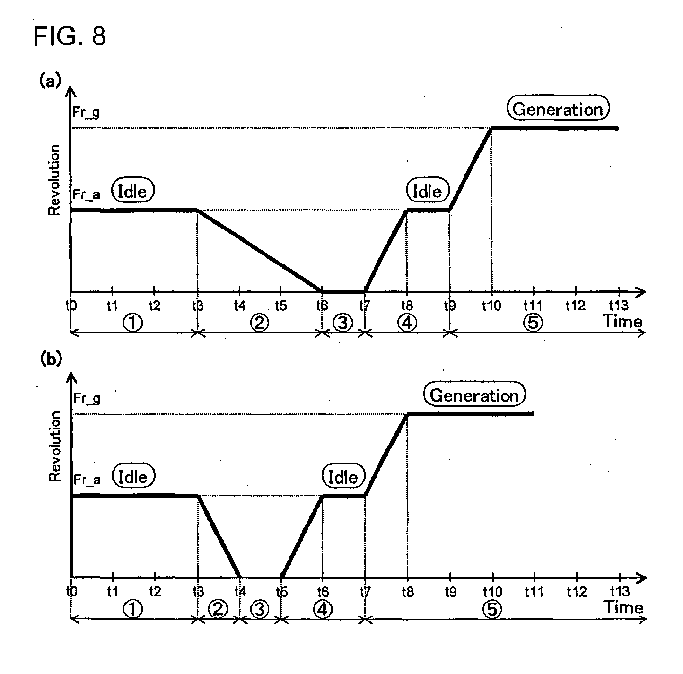

FIG. 8 is a frame format illustrating one example of the operation of engine start-and-stop control according to one preferred embodiment of the present invention.

In FIG. 8, (a) illustrates in frame format the relationship of the engine rotational speed Fr_cnv to time in the case where engine stop control is not performed when performing idle stop from the idle state of engine 1, with the horizontal axis (x axis) representing elapsed time and the **vertical** axis (y axis) representing engine rotational speed Fr_cnv. On the other hand, (b) illustrates in frame format the relationship of the engine rotational speed Fr_cnv to time in the case where engine stop control is performed when the engine 1 is set from idle state to idle stop state, with the horizontal axis (x axis) representing elapsed time and the **vertical** axis (y axis) representing engine rotation speed Fr_cnv.

In (a), the engine 1 performs idle operation during period (1). At time t3, idle operation is stopped, the rotational speed of the engine 1 is gradually reduced during period (2), and the engine 1 stops completely at time t6. We will now consider a case where the operation command is changed to "power running" during period (3) and the engine power generation must be restarted immediately. Period (3) is a restart process period of the engine, and the engine 1 must maintain the stopped state until the process is completed. The engine start control is started from time t7 when the above process is completed, wherein the idle operation is established during period (4), the generating operation of the engine 1 is started at time t9, and the generation power of the engine 1 is obtained during period (5). If the operation command is changed to "power running" at time t4 and the acceleration of the rolling stock is started, generation power of the engine 1 cannot be obtained from time t4 to time t9, so the accelerating power is borne only by the power storage unit 8.

In (b), the engine 1 performs idle operation during period (1). Idle operation is stopped at time t3, the rotational speed of the engine 1 is gradually reduced during period (2), and the engine stops completely at time t4. In other words, it can be recognized that the period required for stopping the engine can be shortened from t3 to t4 according to (b) performing engine stop control, compared to (a) where the required time was from t3 to t6. We will now consider a case where the operation command is changed to "power running" during period (2) and the engine power generation must be restarted immediately. Period (3) is a restart process period of the engine, and the engine 1 must maintain the stopped state until the process is completed. The engine start control is started from time t5 when the above process is completed, wherein idle operation is establishedduringperiod (4), the generating operation of the engine 1 is started at time t7, and the generation power of the engine 1 is obtained during period (5). If the operation command is changed to "power running" at time t4 and the acceleration of the rolling stock is started, generation power of the engine 1 cannot be obtained from time t4 to time t7, so the accelerating power is borne only by the power storage unit 8.

According to this configuration, the system general control section 9 determines whether it is necessary to start or stop the engine based on the rotational speed Fr_cnv of the generator 2 obtained via the speed sensor 13a and the speed computing section 14a and the power storage quantity SOC obtained via the power storage unit 9, outputs a torque current command Iqp_cnv to the converter unit 3, and controls the starting and stopping of the engine via the torque of the generator 2. In other words, by controlling the starting and stopping of the engine 1 promptly via the torque of the generator 2, it becomes possible to shorten the engine power generation start time during idle stop control, to shorten the time for performing acceleration using only the discharge power of the power storage unit 8, and to minimize the deterioration of acceleration performance of the rolling stock.

**Claims**

1. A driver of rolling stock comprising a DC power generation means (2) having a converter means (3) for converting an AC power generated via a generation means driven by an engine (1) to DC power, an inverter means (4) for converting the DC power to AC power, an electric motor (5) driven by the inverter means, a power storage means (8) having a function to charge and discharge the DC power, a control means (9) for controlling the above respective means, a means (13a) for detecting a rotational speed of the generation means, a means (13b) for detecting a rotational speed of the electric motor, a means (9) for detecting a storage power quantity of the power storage means, and a means (9) for detecting the DC power converted via the DC power generation means, **characterized in that**

   the control means determines whether it is necessary to start or stop of the engine according to the rotational speed of the electric motor and the storage power quantity of the power storage means, and controls an operation state of the engine by a drive torque from the generation means from a period in which the engine is running to a period in which the engine is stopped.

2. The driver of rolling stock according to claim 1, wherein
   the control means adjusts an output of the electric motor via the inverter means in response to the operation state of the engine.

3. The driver of rolling stock according to claim 1, wherein
   the control means controls the operation state of the engine by adjusting the drive torque of the generation means via the converter means.

4. The driver of rolling stock according to claim 2, wherein
   the control means controls the operation state of the engine by adjusting the drive torque of the generation means via the converter means.

**Patentansprüche**

1. Schienenfahrzeugantrieb, umfassend ein Gleichstromleistungserzeugungsmittel (2) mit einem Konvertermittel (3) zum Umwandeln einer Wechselstromleistung, die über ein von einer Maschine (1) angetriebenes Erzeugungsmittel erzeugt wird, in Gleichstromleistung, ein Wechselrichtermittel (4) zum Umwandeln der Gleichstromleistung in Wechselstromleistung, einen durch das Wechselrichtermittel angetriebenen elektrischen Motor (5), ein Leistungsspeichermittel (8) mit einer Funktion zum Aufladen und Entladen der Gleichstromleistung, ein Steuermittel (9) zum Steuern der jeweiligen genannten Mittel, ein Mittel (13a) zum Detektieren der Rotationsgeschwindigkeit des Erzeugungsmittels, ein Mittel (13b) zum Detektieren der Rotationsgeschwindigkeit des elektrischen Motors, ein Mittel (9) zum Detektieren einer Speicherleistungsmenge des Leistungsspeichermittels, und ein Mittel (9) zum Detektieren des über das Gleichstromleistungserzeugungsmittel umgewandelten Gleichstroms, **dadurch gekennzeichnet, dass**

   das Steuermittel bestimmt, ob es notwendig ist, die Maschine je nach Rotationsgeschwindigkeit des elektrischen Motors und der Speicherleistungsmenge des Leistungsspeichermittels zu starten oder zu stoppen, und steuert einen Betriebszustand der Maschine durch ein Antriebsdrehmoment vom Erzeugungsmittel von einem Zeitraum, in dem die Maschine läuft, bis zu einem Zeitraum, in dem die Maschine ruht.

2. Schienenfahrzeugantrieb nach Anspruch 1, worin
   das Steuermittel die Ausgangsleistung des elektrischen Motors über das Wechselrichtermittel als Antwort auf den Betriebszustand der Maschine einstellt.

3. Schienenfahrzeugantrieb nach Anspruch 1, worin
   das Steuermittel den Betriebszustand der Maschine steuert, indem es das Antriebsdrehmoment des Erzeugungsmittels über das Konvertermittel einstellt.

4. Schienenfahrzeugantrieb nach Anspruch 2, worin
   das Steuermittel den Betriebszustand der Maschine steuert, indem es das Antriebsdrehmoment des Erzeugungsmittels über das Konvertermittel einstellt.

**Revendications**

1. Entraînement de matériel roulant comportant des moyens de génération de courant continu (2) ayant un moyen de convertisseur (3) pour convertir un courant alternatif généré par l'intermédiaire d'un moyen de génération entraîné par un moteur (1) en courant continu, un moyen d'inverseur (4) pour convertir le courant continu en courant alternatif, un moteur électrique (5) entraîné par les moyens d'inverseur, un moyen de stockage d'énergie (8) ayant une fonction pour charger et décharger le courant continu, un moyen de commande (9) pour commander les moyens respectifs ci-dessus, un moyen (13a) pour détecter une vitesse de rotation du moyen de génération, un moyen (13b) pour détecter une vitesse de rotation du moteur électrique, un moyen (9) pour détecter une quantité d'énergie de stockage du moyen de stockage d'énergie, et un moyen (9) pour détecter le courant continu converti par l'intermédiaire du moyen de génération de courant continu, **caractérisé en ce que**
le moyen de commande détermine s'il est nécessaire de démarrer ou d'arrêter le moteur conformément à la vitesse de rotation du moteur électrique et à la quantité d'énergie de stockage du moyen de stockage d'énergie, et commande un état de fonctionnement du moteur par l'intermédiaire d'un couple d'entraînement provenant du moyen de génération à partir d'une période au cours de laquelle le moteur est en fonctionnement jusqu'à une période au cours de laquelle le moteur est arrêté.

2. Entraînement de matériel roulant selon la revendication 1, dans lequel
le moyen de commande ajuste une sortie du moteur électrique par l'intermédiaire du moyen d'inverseur en réponse à l'état de fonctionnement du moteur.

3. Entraînement de matériel roulant selon la revendication 1, dans lequel
le moyen de commande commande l'état de fonctionnement du moteur en ajustant le couple d'entraînement du moyen de génération par l'intermédiaire du moyen de convertisseur.

4. Entraînement de matériel roulant selon la revendication 2, dans lequel
le moyen de commande commande l'état de fonctionnement du moteur en ajustant le couple d'entraînement du moyen de génération par l'intermédiaire du moyen de convertisseur.

FIG.1

EP 2 055 548 B1

FIG. 2

ENGINE 1

GENERATOR 2

13a

Fr_gen

CONVERTER MAIN CIRCUIT 3

22a 22b 22c

Iu Iv Iw

Vp

16
15
17
18

POWER STORAGE UNIT 8

Sp2
Sp1

VECTOR CONTROL COMPUTING UNIT 20

CURRENT COMMAND GENERATOR 21

SPEED COMPUTING SECTION 14a

Fr_gen

SYSTEM GENERAL CONTROL SECTION 9

ENGINE CONTROLLER 19

F_eng

Se

# FIG. 3

## (1) CONTROL MAP

## (2) CONTROL MATRIX

| No. | OPERATION STATE | AREA A | AREA B | AREA C | AREA D |
|---|---|---|---|---|---|
| (1) | STOP | O | — | — | — |
| (2) | COASTING | O | × | × | O |
| (3) | POWER RUNNING (ACCELERATION) | × | × | × | × |
| (4) | BRAKING (DECELERATION) | O | O | × | O |
| (5) | CONSTANT-SPEED DRIVING | — | × | × | × |
| (6) | SUPPRESSED-SPEED DRIVING | — | O | × | × |

# FIG. 4

EP 2 055 548 B1

# FIG. 5

(a)

(b)

# FIG. 6

EP 2 055 548 B1

# FIG. 7

ENGINE OPERATION FLAG
Flg_eng_opr

ENGINE SELF-SUSTAINABLE FLAG
Flg_eng_rev

ENGINE ESTABLISHED FLAG
Flg_eng_up

ENGINE TORQUE CONTROL FLAG
Flg_eng_ctr

CONVERTER EXCITATION
CURRENT COMMAND
Idp_cnv

CONVERTER TORQUE CURRENT
COMMAND
Iqp_cnv

ENGINE ROTATIONAL SPEED
(GENERATOR ROTOR FREQUENCY)
Fr_cnv

(START CONTROL)

(STOP CONTROL)

0A

0A

Fr_a

Fr_1

IDLING

Fr_1

Fr_0

Fr_s

0rpm(0Hz)

t0  t1  t2        t3        t4           t5          t6      t7 t8        TIME

START
ENGINE START CONTROL

ENGINE
ESTABLISHED

START
ENGINE STOP CONTROL

STOP
DETECTED

EP 2 055 548 B1

FIG. 8

(a)

(b)

# FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004282859 A
- JP 2005061278 B
- US 20040030470 A
- US 20050262827 A